**Europäisches Patentamt**

**European Patent Office**

**Office européen des brevets**

(11) Veröffentlichungsnummer: **0 436 772 A2**

## (12) EUROPÄISCHE PATENTANMELDUNG

(21) Anmeldenummer: **90108424.4**

(22) Anmeldetag: **04.05.90**

(51) Int. Cl.5: **F16L 11/11**

(30) Priorität: **12.01.90 DE 4000711**

(43) Veröffentlichungstag der Anmeldung:
**17.07.91 Patentblatt 91/29**

(84) Benannte Vertragsstaaten:
**AT BE CH DE DK ES FR GB IT LI NL SE**

(71) Anmelder: **Witzenmann GmbH
Metallschlauch-Fabrik Pforzheim
Östliche Karl-Friedrich-Strasse 134
W-7530 Pforzheim(DE)**

(72) Erfinder: **Gropp, Reinhard Dipl.-Ing.
In der Laier 17
W-7540 Neuenbürg-Arnbach(DE)**

(74) Vertreter: **Lemcke, Rupert, Dipl.-Ing. et al
Patentanwälte Dipl.-Ing. R. Lemcke Dr.-Ing.
H.J. Brommer Bismarckstrasse 16 Postfach
4026
W-7500 Karlsruhe 1(DE)**

(54) **Leitungselement in Form eines Wellschlauches oder Balges.**

(57) Es wird ein Leitungselement in Form eines mit endständigen Anschlußteilen fest und dicht verbundenen Wellschlauches oder Balges angegeben, zu dem koaxial ein Geflechtsschlauch verläuft, der ihn gegen Längung abstützt, wobei der Geflechts- schlauch seinerseits mit einer inneren Radialabstützung versehen ist. Dabei wird der Geflechtsschlauch einschließlich seiner Radialabstütung innerhalb des Wellschlauches angeordnet.

Fig. 1

EP 0 436 772 A2

## LEITUNGSELEMENT IN FORM EINES WELLSCHLAUCHES ODER BALGES

Die Erfindung betrifft ein Leitungselement, insbesondere für Schmiereigenschaften aufweisende Medien in Form eines mit endständigen Anschlußteilen fest und dicht verbundenen Wellschlauches oder Balges mit ringförmiger oder schraubengangförmiger Wellung, zu dem koaxial ein Geflechtsschlauch verläuft, der ihn gegen Längung abstützt und dazu ebenfalls mit den Anschlußteilen fest verbunden ist, wobei der Geflechtsschlauch seinerseits mit einer inneren Radialabstützung versehen ist, die bei unbelastetem Zustand des Leitungselementes praktisch spielfrei an ihm anliegt und seine maximale Länge bestimmt.

Derartige nachfolgend zur Vereinfachung nur noch mit der Bezeichnung Wellschläuche weitergeführten Wellschläuche oder Bälge dienen üblicherweise zum Hindurchleiten eines unter Überdruck stehenden Fluids.

Dabei bestehen sie in der Regel einschließlich des Geflechtsschlauches und dessen Radialabstützung sowie den Anschlußteilen vorzugsweise aus Metall, worauf die Erfindung jedoch nicht beschränkt sein soll. Vielmehr sollen auch andere geeignete Materialien, insbesondere Kunststoffe, als eingeschlossen gelten. Die Materialwahl richtet sich dabei grundsätzlich nach dem jeweiligen Anwendungsfall, insbesondere im Hinblick auf die auftretenden Belastungen bezüglich Druck, Temperatur und chemischer Einflüsse, weshalb die geeignete Materialwahl nachfolgend unterstellt wird, wenn darauf nicht in speziellem Zusammenhang einzugehen ist.

Soweit vorstehend Wellschläuche erwähnt sind, sind darunter nicht nur Wellschläuche mit Kreisquerschnitt zu verstehen, sondern ebenso auch Wellschläuche mit ovalem oder ähnlichem Querschnitt.

Die gattungsgemäßen Wellschläuche dienen der flexiblen, das heißt biegbaren Verbindung zweier medienführender Teile, an die sie angeschlossen sind.

Unter dem Druck des Mediums oder Fluids versucht der Schlauch bekanntermaßen sich zu längen, so daß es einerseits erforderlich ist, den axialen Abstand der Schlauchanschlußteile zu halten und andererseits den Schlauch gegen Ausknikken bzw. seitliches Ausbrechen zu stabilisieren.

Üblicherweise dient dazu eine unmittelbare Umhüllung des Wellschlauches durch einen Schlauch aus Drahtgeflecht, der mit den Anschlußteilen fest verbunden ist. Durch die axiale Längenänderung des Wellschlauches wird der Geflechtsschlauch auf Zug belastet. Dabei versucht er, seinen Durchmesser zu verringern und legt sich folglich an den Wellschlauch an, der den Geflechtsschlauch dann radial abstützt und so dessen weitere Durchmesserverringerung verhindert. Bei betriebsbedingten Bewegungen des Schlauches kommt es nun zu Relativbewegungen zwischen Wellschlauch und Geflechtsschlauch, wodurch beide abrasiv beansprucht werden.

Im wesentlichen ergibt sich damit eine verschleißbedingte Verringerung des Geflechtsdrahtdurchmessers, eine verschleißbedingte Wanddikkenreduktion oder Kerbenbildung an den Außenkrempen des Wellschlauches sowie eine reibungsbedingte Veränderung von Biegelinie und neutraler Biegefaser des Leitungselementes mit der Folge seiner lokalen Überbeanspruchung, die zur Undichtheit der Leitung führt.

Die daraus resultierenden Leckverluste sind dann unzulässig, wenn das Durchflußmedium gesundheitsschädlich oder explosibel ist. Aber auch ohne solche Sicherheitsrisiken sind Leckverluste unerwünscht, da sie zumindest einen Energieverlust darstellen, der die Wirtschaftlichkeit der Anlage verringert.

Um die Abrasion zwischen Wellschlauch und Geflechtsschlauch zu verhindern, wird gemäß DE-GM 85 18 194.3 vorgeschlagen, den Raum zwischen Geflechtsschlauch und Wellschlauch mit einem hochviskosen Schmiermittel zu füllen, das die Oberflächen voneinander trennt.

Damit ergibt sich aber eine zusätzliche Durchmesservergrößerung, die sich negativ auswirkt auf eine kompakte Bauform. Dies wird noch dadurch verstärkt, daß der Geflechtsschlauch mit einer zusätzlichen fluiddichten Schicht versehen werden muß, da sonst Schmiermittel nach außen tritt.

Für eine solche Abdichtung des Geflechtsschlauches kommt insbesondere ein Verbund aus Gummi oder Kunststoff in Betracht. Dessen Empfindlichkeit gegen sehr hohe oder niedrige Temperaturen schränkt jedoch den zulässigen Temperaturbereich für das Leitungselement erheblich ein.

Auch sind für die Befüllung des Zwischenraumes zwischen Wellschlauch und Geflechtsschlauch mit Schmiermittel sowie für dessen Ersatz, wenn es verbraucht ist, zusätzliche Bauteile vorzusehen, zum Beispiel in Form von Schmiernippeln.

Aufgabe der Erfindung ist es daher, ein Leitungselement der eingangs beschriebenen Art dahin zu verbessern, daß die Reduktion der tribologischen Beanspruchung einfacher, unter Verwendung vorhandener Elemente und Beseitigung jeglicher Temperatur- und Dichtungsprobleme erfolgt, wobei diese Maßnahmen auch noch innerhalb des für den Wellschlauch vorgesehenen Bauraumes und damit unter äußerer Durchmesserreduzierung des Leitungselementes durchgeführt sein sollen.

Die Aufgabe wird erfindungsgemäß dadurch gelöst, daß der Geflechtsschlauch einschließlich seiner Radialabstützung innerhalb des Wellschlauches angeordnet ist.

Durch die erfindungsgemäßen Maßnahmen ist erreicht, daß die Schmierung zwischen Geflechtsschlauch und Wellschlauch von dem durch das Leitungselement fließenden Medium übernommen wird, so daß kein zusätzliches, besonderes Schmiermittel zwischen Geflechtsschlauch und Wellschlauch erforderlich ist. Dadurch entfallen gleichzeitig die dafür benötigten Bauteile (Schmiernippel).

Durch die Verlagerung des Geflechtsschlauches in das Innere des Wellschlauches erübrigt sich außerdem eine zusätzliche fluiddichte Außenschicht des Leitungselementes, während sich gleichzeitig der für das Leitungselement benötigte Bauraum in Radialrichtung erheblich verringert. Als besondere Wirkung ergibt sich auch noch, daß der Durchmesser des Wellschlauches trotz der erfindungsgemäßen Maßnahmen im wesentlichen konstant gehalten werden kann, ohne die hydraulischen Durchflußwerte des Leitungselementes zu verschlechtern. Dies beruht auf der Tatsache, daß bei einem durchströmten Wellschlauch sich aufgrund der in die Strömung hinein-ragenden Wellen starke Verwirbelungen bilden, die eine laminare, energetisch günstige Strömung verhindern. Der erfindungsgemäß in das Leitungselement eingezogene Geflechtsschlauch deckt nun aber die Wellen ab, bildet damit eine hydraulisch glattere Wand und ermöglicht so günstigere Strömungsverhältnisse.

Um dabei den Strömungsquerschnitt so groß wie möglich zu halten, ist es günstig, wenn im unbelasteten Zustand der Außendurchmesser des Geflechtsschlauches im wesentlichen gleich dem lichten Innendurchmesser des Wellschlauches ist.

Durch die Bewegungen des Leitungselementes kann es vorkommen, daß sich die Radialabstützung des Geflechtsschlauchesaxial zu verschieben trachtet, so daß der Geflechtsschlauch lokal nicht radial abgestützt ist. Von daher ist es günstig, wenn die Radialabstützung des Geflechtsschlauches im unbelasteten Zustand des Leitungselementes durch die Anschlußteile praktisch spielfrei in axialer Richtung festgelegt ist.

In bezug auf die feste und dichte Verbindung von Wellschlauch, Geflechtsschlauch und Anschlußteil ist es zweckmäßig, die bündigen, axial außen liegenden Stirnkanten eines Befestigungsringes, des Wellschlauches und des Geflechtsschlauches untereinander und mit dem Anschlußteil zu verschweißen, wobei der Befestigungsring die Enden des Wellschlauches und des Geflechtsschlauches sowie einen außenzylindrischen Stutzen des Anschlußteiles kraftschlüssig umfängt.

Es ist günstig, die Radialabstützung des Geflechtsschlauches als Wendel aus profilierten Material auszuführen, insbesondere wenn das Materialprofil ein Rechteckprofil ist.

Strömungstechnisch ist es dabei vorteilhaft, wenn die längere Seite des Rechteckprofils parallel zur Achse des Leitungselementes ist.

Unter tribologischen Gesichtspunkten bieten sich für das Profil auch Rund- oder Ovalprofile an, bei denen wegen ihrer spezifischen Kontur ein besserer Schmierstofftransport in den Spalt zwischen Radialabstützung und Geflecht gegeben ist.

Diese Vorteile und eine möglichst große lichte Weite vereinigt ein bogenförmiges Profil, bei dem die konvexe Profilseite zum Geflechtsschlauch hin gerichtet ist.

Wenn das Profil ein flaches Rechteckprofil ist, das im mittleren Bereich der axialen Breite eine Kröpfung in Form einer Radialversetzung von mindestens der Profildicke aufweist, und die Wendel so gewickelt ist, daß sich axial benachbarte Profilkanten schuppenförmig übergreifen, so ergeben sich besonders gute Voraussetzungen für störungsfreie Strömungen im Leitungselement.

Um den Verschleiß zwischen Wendel und Geflechtsschlauch möglichst gering zu halten, kann die Wendel im Bereich ihres Kontaktes mit dem Geflechtsschlauchs mit einer verschleißmindernden Schicht überzogen sein.

Wenn die Windungen der Wendel durch dazwischen eingesetzte Spreizfedern axial auf gleichmäßigen Abstand gebracht sind, wird gewährleistet, daß sich die Wendel nicht lokal überproportional dehnt, wodurch in diesem Bereich wegen dort geringerer Radialabstützung eine strömungsbehindernde Durchmesserreduktion des Geflechtsschlauches auftreten könnte.

Damit die eingesetzten Spreizfedern nicht bei Belastung zwischen den Windungen herausspringen, können die sich radial erstreckenden Seiten des Profils in Umfangsrichtung verlaufende Nuten aufweisen, mit denen sich die Spreizfedern korrespondierend in Eingriff befinden.

Auch wenn die Windungen der Wendel auf der biegeneutralen Linie des Leitungselementes durch ein oder mehrere Zwischenelemente auf konstantem Abstand gehalten sind, behindert dies eine lokale Überdehnung der Wendel. Gleichzeitig wird auf diese Weise auch eine Begrenzung des Biegeradius realisiert.

Dies ist auch der Fall, wenn die Radialabstützung des Geflechtsschlauches ein Wickelschlauch ist, der durch schraubengangförmiges Wickeln eines Bandmaterials hergestellt ist.

Dabei ist es besonders zweckmäßig, wenn der Wickelschlauch aus einem in Axialrichtung S-förmig profilierten Band besteht, in der Art, daß die freien Profilschenkel gegenständig radial gerichtet sind und die Profilschenkel benachbarter Wicklungen axial hintergreifend miteinander verhakt sind.

Um Axialkräfte noch besser aufnehmen zu können, kann der Wickelschlauch auch ein Agraffschlauch aus einem S-förmig profilierten Band mit ineinander verfalzten Bandkanten sein.

Fertigungstechnisch ist es einfacher, wenn der Wickelschlauch aus zwei U-förmig profilierten Bändern gewickelt ist, wobei das eine nach innen und das andere nach außen offen ist, und die Bänder derart axial gegeneinander versetzt und sich gegenseitig überdeckend gewickelt sind, daß sich die freien Profilkanten hintergreifen und die profilierten Bänder in axialer Richtung miteinander verhakt sind.

Als weitere Möglichkeit kann die Radialabstützung des Geflechtsschlauches aus Ringen aus profiliertem Material bestehen, wobei die Ringe gegeneinander in Axialrichtung abgestützt sind.

Bei der Wahl des Profiles sind unter strömungstechnisch und tribologischen Aspekten die weiter oben für Wendel beschriebenen Vorteile entsprechender Profile zu berücksichtigen, was zu vergleichbaren Ausführungen der Ringe führt.

Bei der aus Ringen bestehenden Radialabstützung ist es besonders zweckmäßig, die Ringe gleichmäßig zu beabstanden, damit sie nicht lokal zusammenrutschen, wodurch in anderen Bereichen wegen dort geringer Radialabstützung eine strömungsbehindernde Durchmesserreduktion des Geflechtsschlauches auftreten könnte. Für diese gleichmäßige Beabstandung bieten sich die gleichen Maßnahmen an wie für die gleichmäßige Beabstandung der Wendelwindungen.

Eine besonders reib- und damit verschleißarme Ausführungsform ergibt sich, wenn die Abstützung unter Bildung eines Wiegegelenkes durch je zwei Nasen des einen Ringes und damit korrespondierenden Ausnehmungen am benachbarten Ring schwenkbar erfolgt und die Nasen und Ausnehmungen auf der biegeneutralen Linie des Leitungselementes angeordnet sind.

Weitere Merkmale und Vorteile ergeben sich aus der nachfolgenden Beschreibung von Ausführungsbeispielen, die in der Zeichnung dargestellt sind. Dabei zeigen:

Fig. 1   einen Teilschnitt durch ein erfindungsgemäßes Leitungselement,

Fig. 2   bis 12 erfindungsgemäße Varianten eines Leitungselementes nach Fig. 1.

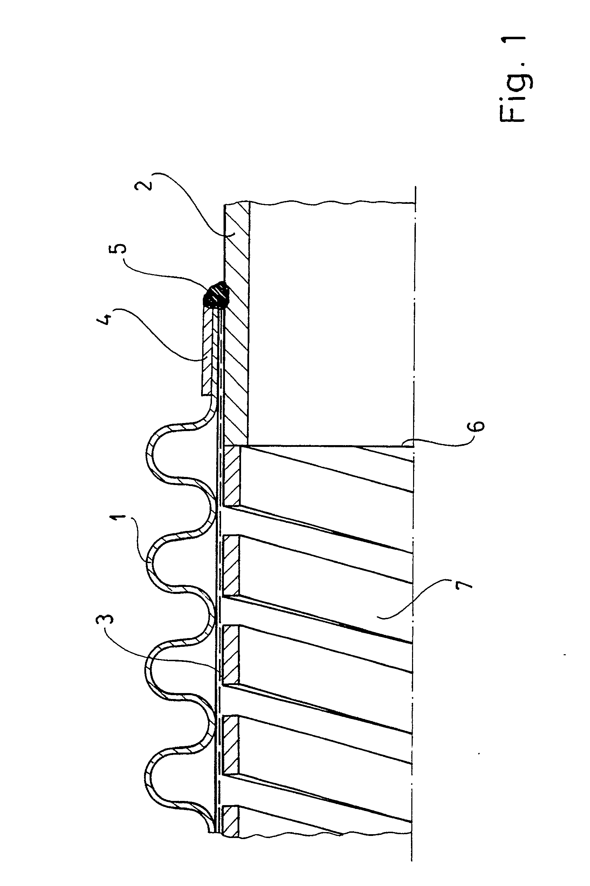

Fig. 1 zeigt in Schnittdarstellung einen Teil der geschnittenen Seitenansicht eines Wellschlauches 1, der von einem Anschlußteil ausgeht, von dem nur sein außenzylindrischer Stutzen 2 dargestellt ist.

Bei diesem Anschlußteil kann es sich um Fest- oder Losflansche, feststehende oder drehbare Gewindeanschlüsse, einfache Anschweißenden oder ähnliches handeln. Ein ebensolches Anschlußteil muß man sich am anderen Ende des Wellschlauches vorstellen, wobei dort die Konstruktion im übrigen genau dem hier Dargestellten enspricht.

Im Innern des Wellschlauches 1 erstreckt sich ein Geflechtsschlauch 3, der im unbelasteten Zustand des Leitungselementes einen Außendurchmesser von der Größe der lichten Weite des Wellschlauches 1 hat.

Der Geflechtsschlauch 3 und der Wellschlauch 1 sind an ihrem Ende über den außenzylindrischen Stutzen 2 des Anschlußteiles gezogen und werden dort durch einen aufgeschrumpften Befestigungsring 4 kraftschlüssig gehalten. Um diese Verbindungsstelle zu sichern und abzudichten, ist eine Schweißnaht 5 so gelegt, daß sie die bündig aufeinanderliegenden Stirnkanten des Befestigungsringes 4, des Wellschlauches 1 und des Geflechtsschlauches 3 fest und fluiddicht zum einen miteinander und zum anderen mit dem Stutzen 2 des Anschlußteiles verbindet.

Der Stutzen 2 des Anschlußteiles hat ein Anlagebund 6, mit dem eine Radialabstützung 7 in axialer Richtung festgelegt wird.

Diese Radialabstützung befindet sich ebenso wie der Geflechtsschlauch im mit einem druckbeaufschlagtem Fluid gefüllten Innenraum des Wellschlauches 1. Wegen dieses Druckes versucht der Wellschlauch 1 sich zu längen. Dadurch wird der Geflechtsschlauch 3 gestreckt. Dieser ist aber so geflochten, daß er auf eine Vergrößerung seiner Länge mit einer Durchmesserreduktion reagiert.

Um diese zu verhindern, wird der Geflechtsschlauch 3 durch die Radialabstützung 7 auf seinem Innendurchmesser fixiert, so daß folglich auch seine Länge konstant bleiben muß. Dadurch wird der Wellschlauch 1 wiederum an einer Dehnung gehindert.

Um trotzdem die Flexibilität des Leitungselementes zu bewahren, wird auch für die Radialabstützung des Geflechtsschlauches ein möglichst elastisches Bauelement verwendet.

Dazu findet eine Wendelfeder Anwendung, die sich axial leicht zusammendrücken läßt, deren Enden man radial einfach verschwenken kann, die aber gleichzeitig sehr widerstandsfähig gegen Durchmesserverringerungen ist, so daß sie sich für die Radialabstützung des Geflechtsschlauches besonders eignet.

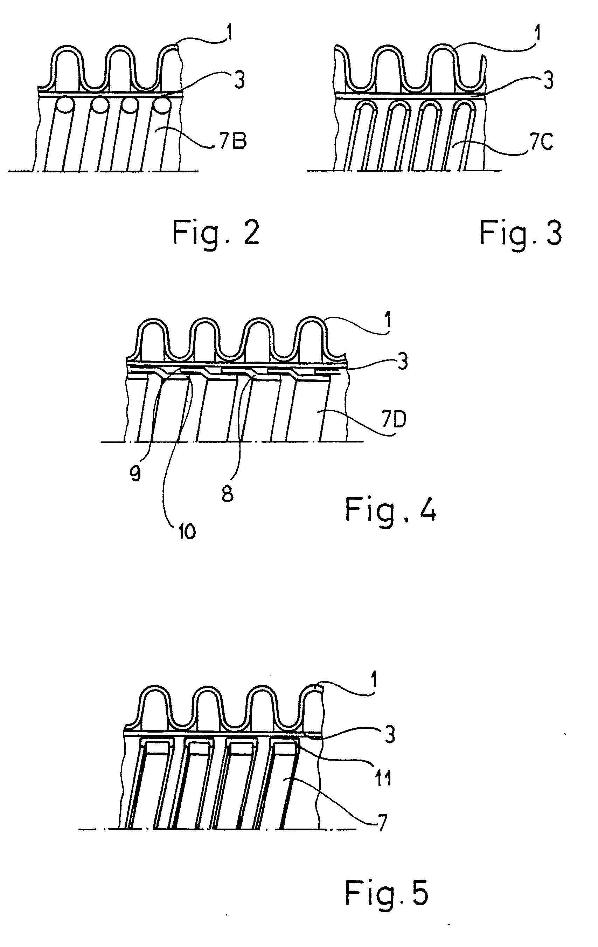

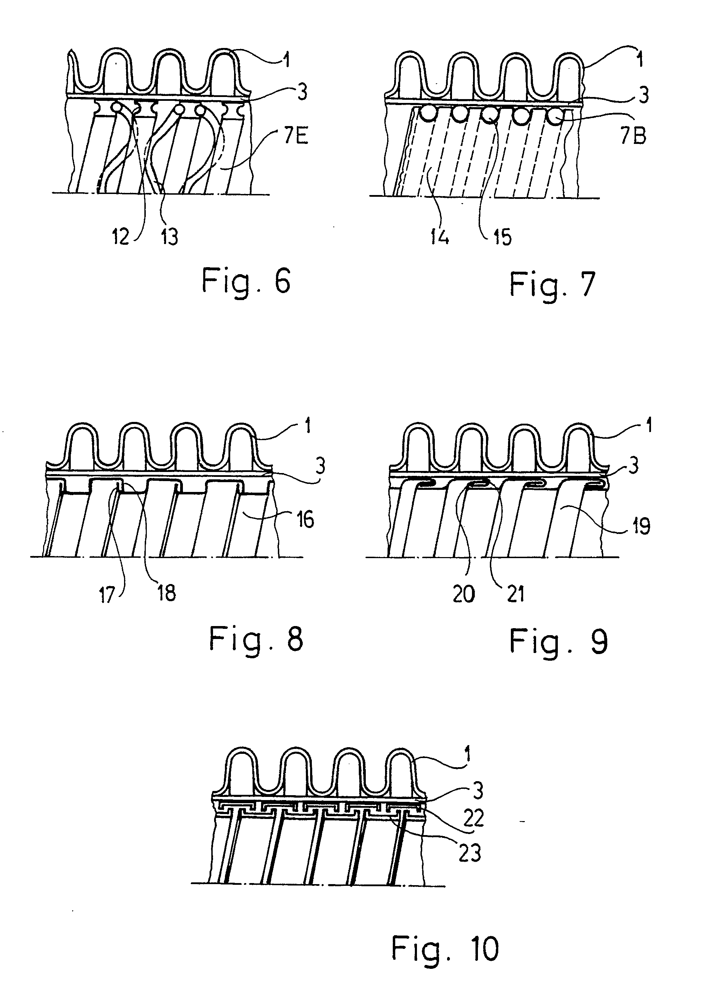

In der Figur I ist dies eine Wendelfeder aus Flachmaterial, aber es sind auch Rundprofile (Figur 2, 7B) oder bogenförmige Profile (Figur 3, 7C) möglich.

Bei diesen Ausführungsformen der Wendel ergeben sich günstigere Spaltformen zwischen Radialabstützung und Geflechtsschlauch, bei dem bogenförmigen Profil nach Figur 3 allerdings nur dann, wenn die konvexe Seite des Profils zum Geflechtsschlauch hin gerichtet ist. Dann liegen konvergente Schmierspalte vor, die den Eintritt von oberflächentrennendem Schmierstoff zwischen die Wendel und den Geflechtsschlauch begünstigen.

Bei den bisher beschriebenen Profilen der Wendel ergeben sich gegenüber einem nicht innen durch einen Geflechtsschlauch abgestützten Wellschlauch günstigere, nicht durch so starke Turbulenzen beeinträchtigte Strömungsverhältnisse.

Um diese Turbulenzen noch weiter zu minimieren, hat die Radialabstützung 7D nach Figur 4 ein flaches Rechteckprofil, das im mittleren Bereich der axialen Breite eine Kröpfung 8 in Form einer Radialversetzung von mindestens der radialen Dicke aufweist. Da die Wendel so gewickelt ist, daß sich benachbarte Bandkanten 9 und 10 schuppenförmig übergreifen, ergibt sich eine hydraulisch noch glattere Innenwand mit den daraus resultierenden Möglichkeiten für eine verlustarme Strömung.

In Figur 5 ist die Radialabstützung 7 im Bereich zwischen ihr und dem Geflechtsschlauch 3 mit einer Schicht 11 überzogen. Diese in Form eines aufgesetzten U-Profils ausgebildete Schicht hat gute Gleiteigenschaften, so daß sie die Reibung zwischen Radialabstützung und Geflechtsschlauch und den damit verbundenen Verschleiß verringert.

Die in der Figur 6 dargestellte Radialabstützung 7E weist an ihren sich radial erstreckenden Profilseiten sich in Umfangrichtung erstreckende Nuten 12 auf, in die Spreizfedern 13 korrespondierend eingreifen. Durch diese Spreizfedern werden die einzelnen Windungen der Radialabstützung daran gehindert, sich sehr eng aneinander zu legen, wodurch gleichzeitig in anderen Bereichen sich die Abstände zwischen zwei Windungen vergrößern würden, weshalb dort der Geflechtsschlauch 3 seinen Durchmesser verringern könnte, ohne radial abgestützt zu sein.

In Figur 7 ist eine andere Ausführungsform dargestellt, mit der die Radialabstützung 7B axial beabstandet wird. In ein auf der biegeneutralen Linie des Leitungselementes liegendes Band, dessen Breite ungefähr dem Durchmesser des Geflechtsschlauches 3 entspricht, sind an dessen Ränder Einbuchtungen 15 vorhanden, in die die einzelnen Windungen der Radialabstützung 7B korrespondierend eingreifen. Bei einer Biegung des Leitungselementes aus der Zeichenebene heraus wird das in dieser Richtung biegeweiche Band mitverbogen. Dabei verhindert es aber, daß die Windungen der Radialabstützung ihren Abstand zueinander entlang der biegeneutralen Linie verändern. Dadurch wird eine Beschränkung des Biegeradius realisiert.

In Figur 8 wird die Radialabstützung des Geflechtsschlauches durch einen Wickelschlauch 16 realisiert. Dieser ist aus einem S-förmig profilierten Band schraubengangförmig gewickelt, in der Art, daß der radial nach außen laufenden Schenkel 17 und der radial nach innen laufende Schenkel 18 sich axial hintergreifen und dabei miteinander verhaken. Dadurch wird ebenfalls eine Beschränkung des Biegeradius bewirkt.

In Figur 9 ist der Wickelschlauch durch einen Agraffschlauch 19 ersetzt, bei dem die einzelnen Schenkel 20 und 21 miteinander nicht nur verhakt sondern auch verfalzt sind.

In Figur 10 besteht der Wickelschlauch aus zwei U-förmig profilierten Bändern 22 und 23, wobei Band 22 nach innen offen ist, Band 23 nach außen offen ist, und die Bänder derartig gegeneinander überdeckend gewickelt sind, daß sich ihre freien Profilkanten hintergreifen und die Bänder 22 und 23 sich in axialer Richtung miteinander verhaken.

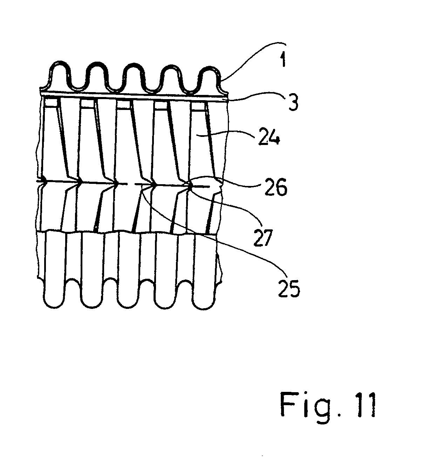

In Figur 11 wird die Radialabstützung durch Ringe 24 realisiert. Im dargestellten Beispiel ist das Profil dieser Ringe rechteckig, es kann aber auch rund, oval oder bogenförmig sein (in etwa entsprechend Fig. 2 und 3) und dabei eventuell noch mit einer verschleißmindernden Schicht überzogen sein (in etwa vergleichbar mit Fig. 5).

In Fig. 11 weisen die Ringe auf der biegeneutralen Linie 25 eine Nase 26 auf, die in einer Aussparung 27 am benachbarten Ring eingreift und so ein Wiegegelenk bildet. Dies ergibt eine reibungsarme Radialabstützung mit gleichzeitiger Biegeradiusbeschränkung.

Es ist jedoch auch möglich die axiale Beabstandung der Ringe außer durch Nasen durch eingesetzte Spreizfedern oder starre Zwischenelemente auszuführen (im wesentlichen vergleichbar mit Fig. 6 und 7).

## Patentansprüche

1. Leitungselement insbesondere für Schmiereigenschaften aufweisende Medien in Form eines mit endständigen Anschlußteilen fest und dicht verbundenen Wellschlauches oder Balges mit ringförmiger oder schraubengangförmiger Wellung, zu dem koaxial ein Geflechtsschlauch verläuft, der ihn gegen Längung abstützt und dazu ebenfalls mit den Anschlußteilen fest verbunden ist, wobei der Geflechtsschlauch seinerseits mit einer inneren Radialabstützung versehen ist, die bei unbelastetem Zustand des Leitungselementes praktisch spielfrei an ihm anliegt und seine maximale Länge bestimmt,
dadurch gekennzeichnet,
daß der Geflechtsschlauch (3) einschließlich seiner Radialabstützung (7, 7B, 7C, 7D, 7E, 16, 19, 24) innerhalb des Wellschlauches (1) angeordnet ist.

2. Leitungselement nach Anspruch 1,
dadurch gekennzeichnet,
daß im unbelasteten Zustand der Außendurchmesser des Geflechtsschlauches (3) im wesentlichen gleich dem lichten Innendurchmesser des Wellschlauches (1) ist.

3. Leitungselement nach Anspruch 1,
dadurch gekennzeichnet,
daß die Radialabstützung (7, 7B, 7C, 7D, 7E, 16, 19, 24) des Geflechtsschlauches (3) im unbelasteten Zustand des Leitungselementes durch die Anschlußteile (2) praktisch spielfrei in axialer Richtung festgelegt ist.

4. Leitungselement nach Anspruch 1,
dadurch gekennzeichnet,
daß die bündigen, axial außen liegenden Stirnkanten eines Befestigungsringes (4), des Wellschlauches (1) und des Geflechtsschlauches (3) untereinander und mit dem Anschlußteil (2) verschweißt sind, wobei der Befestigungsring die Enden des Wellschlauches und des Geflechtsschlauches sowie einen außenzylindrischen Stutzen des Anschlußteiles kraftschlüssig umfängt.

5. Leitungselement nach Anspruch 1,
dadurch gekennzeichnet,
daß die Radialabstützung (7, 7B, 7C, 7D, 7E) des Geflechtsschlauches als Wendel aus profiliertem Material ausgeführt ist.

6. Leitungselement nach Anspruch 5,
dadurch gekennzeichnet,
daß das Materialprofil ein Rechteckprofil ist.

7. Leitungselement nach Anspruch 6,
dadurch gekennzeichnet,
daß die längere Seite des Rechteckprofils parallel zur Achse des Leitungselementes ist.

8. Leitungselement nach Anspruch 5,
dadurch gekennzeichnet,
daß das Profil ein Rund- oder Ovalprofil ist.

9. Leitungselement nach Anspruch 5,
dadurch gekennzeichnet,
daß das Profil bogenförmig ausgebildet ist, und daß die konvexe Profilseite zum Geflechtsschlauch (3) hin gerichtet ist.

10. Leitungselement nach Anspruch 5,
dadurch gekennzeichnet,
daß das Profil ein flaches Rechteckprofil ist, das im mittleren Bereich der axialen Breite eine Kröpfung (8) in Form einer Radialversetzung von mindestens der radialen Profildicke aufweist, und daß die Wendel (7D) so gewickelt ist, daß sich axial benachbarte Profilkanten (9, 10) schuppenförmig übergreifen.

11. Leitungselement nach Anspruch 5,
dadurch gekennzeichnet,
daß die Wendel (7) im Bereich des Kontaktes mit dem Geflechtsschlauch (3) mit einer verschleißmindernden Schicht (11) überzogen ist.

12. Leitungselement nach Anspruch 5,
dadurch gekennzeichnet,
daß die Windungen der Wendel (7E) durch dazwischen eingesetzte Spreizfedern (13) axial gleichmäßig beabstandet sind.

13. Leitungselement nach Anspruch 12,
dadurch gekennzeichnet,
daß die sich radial erstreckenden Seiten des Profils in Umfangsrichtung verlaufende Nuten (12) aufweisen, mit denen sich die Spreizfedern (13) korrespondierend in Eingriff befinden.

14. Leitungselement nach Anspruch 5,
dadurch gekennzeichnet,
daß die Windungen der Wendel (7B) auf der biegeneutralen Linie des Leitungselementes durch ein oder mehrere Zwischenelemente (14) auf konstantem Abstand gehalten sind.

15. Leitungselement nach Anspruch 1,
dadurch gekennzeichnet,
daß die Radialabstützung (16, 19) des Geflechtsschlauches (3) ein Wickelschlauch ist, der durch schraubengangförmiges Wickeln eines Bandmaterials hergestellt ist.

16. Leitungselement gemäß Anspruch 15,
dadurch gekennzeichnet,
daß der Wickelschlauch (16) aus einem in Axialrichtung S-förmig profilierten Band besteht, in der Art, daß die freien Profilschenkel (17, 18) gegenständig radial gerichtet sind und daß die Profilschenkel benachbarter Wicklungen sich axial hintergreifend miteinander verhakt sind.

17. Leitungselement gemäß Anspruch 15,
dadurch gekennzeichnet,
daß der Wickelschlauch ein Agraffschlauch (19) aus einem S-förmig profiliertem Band mit ineinander verfalzten Bandkanten (20, 21) ist.

18. Leitungselement gemäß Anspruch 15,
dadurch gekennzeichnet,
daß der Wickelschlauch aus zwei U-förmig profilierten Bändern (22, 23) gewickelt ist, wobei das eine nach innen und das andere nach außen offen ist, und daß die Bänder derart axial gegeneinander versetzt und sich gegenseitig überdeckend gewickelt sind, daß sich die freien Profilkanten hintergreifen und die profilierten Bänder in axialer Richtung miteinander verhakt sind.

19. Leitungselement nach Anspruch 1,
dadurch gekennzeichnet,
daß die Radialabstützung des Geflechtsschlauches (3) aus Ringen (24) aus profiliertem Material besteht und daß die Ringe gegeneinander in Axialrichtung abgestützt sind.

20. Leitungselement nach Anspruch 19,
dadurch gekennzeichnet,
daß das Materialprofil ein Rechteckprofil ist.

21. Leitungselement nach Anspruch 20,
dadurch gekennzeichnet,
daß die längere Seite des Rechteckprofils parallel zur Achse des Leitungselementes ist.

22. Leitungselement nach Anspruch 19,
dadurch gekennzeichnet,
daß das Profil ein Rund- oder Ovalprofil ist.

23. Leitungselement nach Anspruch 19,
dadurch gekennzeichnet,
daß das Profil im wesentlichen bogenförmig ausgebildet ist, und daß die konvexe Profilseite zum Geflechtsschlauch (3) hin gerichtet ist.

24. Leitungselement nach Anspruch 19,
dadurch gekennzeichnet,
daß die Ringe im Bereich des Kontaktes mit dem Geflechtsschlauch mit einer verschleißmindernden Schicht überzogen ind.

25. Leitungselement nach Anspruch 19,
dadurch gekennzeichnet,
daß die Ringe durch zwischen sie eingesetzte Spreizfedern axial gleichmäßig beabstandet sind.

26. Leitungselement nach Anspruch 25,
dadurch gekennzeichnet,
daß die sich radial erstreckenden Seiten des Profils in Umfangsrichtung verlaufende Nuten aufweisen, mit denen sich die Spreizfedern korrespondierend in Eingriff befinden.

27. Leitungselement nach Anspruch 19,
dadurch gekennzeichnet,
daß die Ringe auf der biegeneutralen Linie des Leitungselementes durch ein oder mehrere Zwischenelemente auf konstantem Abstand gehalten sind.

28. Leitungselement nach Anspruch 19,
dadurch gekennzeichnet,
daß die Abstützung unter Bildung eines Wiegegelenkes durch je zwei Nasen (26) des einen Ringes und mit korrespondierenden Ausnehmungen (27) am benachbarten Ring schwenkbar erfolgt und daß die Nasen und Ausnehmungen auf der biegeneutralen Linie (25) des Leitungselementes angeordnet sind.

Fig. 1

EP 0 436 772 A2

Fig. 2

Fig. 3

Fig. 4

Fig. 5

Fig. 6

Fig. 7

Fig. 8

Fig. 9

Fig. 10

Fig. 11